# EUROPÄISCHE PATENTANMELDUNG

(11) **EP 2 159 605 A1**
(43) Veröffentlichungstag der Anmeldung: **03.03.2010**
(21) Anmeldenummer: 08163532.8
(22) Anmeldetag: 02.09.2008
(51) Int. Cl.: G01V 3/12, G01S 13/88, G01S 13/22, G01S 13/24

(54) **Radar-Messverfahren zum Orten eines in einem zu untersuchenden Medium eingebetteten Objekts**

(71) Anmelder: Leica Geosystems AG, 9435 Heerbrugg (CH)
(72) Erfinder: Aeschbacher, Michael, 8500 Frauenfeld (CH); Leich, Martin, 9404 Rorschacherberg (CH); Ruedisser, Andreas, 6900 Bregenz (AT); Giger, Kurt, 9464 Rüthi (CH)
(74) Vertreter: Kaminski Harmann

(57) **Zusammenfassung**

Die Erfindung betrifft ein Radar-Messverfahren zum Orten eines Objekts (12) mittels elektromagnetischer Radar-Signalimpulse (SI), wobei die folgenden Schritte erfolgen:
• Aussenden der Radar-Signalimpulse (SI),
• Empfangen von reflektierten Anteilen der Radar-Signalimpulse (rSI), wobei ein Eingangssignal generiert wird,
• Abtasten des Eingangssignals anhand einer Abtast-Halte-Schaltung, wobei durch einen Samplingpuls die Abtastzeiten des Eingangssignals vorgegeben werden und dadurch ein Ausgangssignal geringerer Frequenz erzeugt wird, und
• Auswerten des Ausgangssignals und daraus Bestimmen einer Lage des Objekts (12).

Erfindungsgemäss werden dabei sowohl senderseitig die auszusendenden Radar-Signalimpulse (SI) als auch empfängerseitig die Abtast-Halte-Schaltung mit einer selben, sich innerhalb eines gespreizten Frequenzspektrums fortlaufend ändernden - insbesondere jitternden - Taktfrequenz getaktet.

## Beschreibung

Die Erfindung betrifft ein Radar-Messverfahren zum Orten eines Objekts nach dem Oberbegriff des Anspruchs 1 sowie eine ebensolche Radar-Messvorrichtung nach dem Oberbegriff des Anspruchs 8.

Das Orten von Objekten mittels Radar-Messtechnik ist für viele Anwendungen seit langem bekannt.

Insbesondere im Baugewerbe spielt die Detektion und Ortung von in einem Medium eingeschlossenen Objekten - insbesondere in Wänden eingebetteter länglicher Objekte - eine wesentliche Rolle, sei es zur Detektion von Armierungseisen, Metallrohren, elektrischen Leitungen oder Kunststoffrohren. Zum Beispiel ist die Kenntnis des Vorhandenseins, der Art und der relativen Lage von im Mauerwerk eingebetteten elektrischen Leitungen beim Bearbeiten desselben durch ein Handwerkzeuggerät wichtig, um einerseits die Leitungen nicht zu beschädigen und andererseits zweckentsprechende Bearbeitungsvorgänge ausführen zu können - zum Beispiel das Erstellen von Dübellöchern mit einem Mindestabstand zu Leitungen oder Armierungseisen.

So werden eingebettete längliche Objekte beispielsweise nach der US 6,541,965 über die Änderung der Impedanz eines eingeprägten magnetischen Nahfeldes, nach der DE 10239431 über die Änderung der Impedanz eines eingeprägten elektrischen Nahfeldes oder nach der US 5,541,605 elektromagnetisch über Radar detektiert und charakterisiert. Da die beiden letztgenannten Messprinzipien physikalisch insbesondere auf die Änderung der Dielektrizitätskonstanten ansprechen, stellt die Detektion von Kunststoffrohrleitungen im Mauerwerk, welche im Frequenzbereich von etwa 1 - 10 GHz eine relative Dielektrizitätskonstante von ca. 4 bis 8 aufweist, eine messtechnische Herausforderung dar. Zusätzlich erschwert wird deren Detektion durch die zur Wärmeisolation in Ziegelsteinen eingebrachten Hohlräume im Mauerwerk, da deren Dimension und Lage denen von Kunststoffrohrleitungen ähnlich ist.

Gattungsgemässe Radarsignal-Messgeräte zum Orten einer Leitung in einer Wand besitzen beispielsweise Antennen zur Abstrahlung von hochfrequenten Radar-Signalimpulsen im Frequenzbereich von z.B. 0.5 - 10 GHz.

Zur Aussendung und zum Empfang sehr breitbandiger elektromagnetischer Radarsignal-Impulse werden dabei meist Antennen verwendet, die einen geringen Schlankheitsgrad, d.h. eine flächenartige Ausdehnung, aufweisen. Antennen mit flächenhafter Ausdehnung lassen sich unter verhältnismässig geringem Aufwand herstellen und zu Arrays konfigurieren.

Beispielsweise beschreibt die Europäische Patentanmeldung mit der Anmeldenummer 08104130.3 eine Radar-Messvorrichtung zur Ortung eines in einem zu untersuchenden Medium eingeschlossenen Objekts mittels elektromagnetischer hochfrequenter Signalimpulse. Dafür sind eine Antennenanordnung in einer ersten Ebene aus mehreren planaren Antennen sowie Sende- und Empfangsschaltungen zur Aussendung bzw. zur Detektion der Signalimpulse vorgesehen.

Um ein Objekt in einer Wand zu lokalisieren, werden nun die breitbandigen Signalimpulse über die an verschiedenen Orten auf dem Medium platzierten Sende-Antennen in das Medium abgestrahlt. Die abgestrahlten Impulse werden an den eingebetteten Objekten reflektiert und von den ebenfalls auf dem Medium platzierten Empfangs-Antennen empfangen.

Um die empfangenen periodischen Signale mit Frequenzen im MHz- und GHz-Bereich direkt abzutasten, kann ein spezielles Samplingverfahren angewendet werden. Bei diesem Verfahren wird das beim Empfangen generierte, hochfrequente Eingangssignal mittels einer Abtast-Halte-Schaltung (Sample-Hold) über einen Schalter mit einem sehr kurzen Samplingpuls abgetastet. Während der Schalter geschlossen ist, gleicht sich das Ausgangssignal dem Eingangssignal an. Öffnet sich der Schalter wieder, wird das Ausgangssignal mit dem Kondensator gehalten. Um das gesamte Eingangssignal, d.h. die Werte des Signals über die gesamte Periode, erfassen zu können, wird der Samplingpuls definiert zeitlich über das Eingangssignal verschoben. Durch die bekannte Verschiebung kann das Eingangssignal am Ausgang mit einer wesentlich geringeren Frequenz abgetastet und in einem Prozessor reproduziert werden.

Durch eine Auswerteeinheit können nun der Ort, die Ausdehnung und/oder die Orientierung des eingebetteten Objektes im Medium in Relation zur Position der Antennen aus dem zeitlichen Verlauf der Signale rekonstruiert und angezeigt werden.

Des Weiteren sind insbesondere aus dem Bereich der Informationsübertragung unter dem Begriff Frequenzspreizung Verfahren bekannt, um durch eine Senkung der spektralen Leistungsdichte der emittierten elektromagnetischen Strahlung die z.B. von der Federal Communications Commission (FCC) vorgegebenen maximal zulässigen Werte für die elektromagnetische Beeinflussung nicht zu überschreiten.

Ein synchronisiertes System, das von einem gleichmässigen Taktgeber getaktet wird, hat aufgrund seiner Periodizität ein sehr schmalbandiges Frequenzspektrum. Bei einem idealen Taktsignal würde dabei die gesamte Energie an einer Frequenz und deren Oberschwingungen konzentriert sein, und somit die emittierte Strahlung eine unendliche hohe spektrale Leistungsdichte aufweisen. In der Praxis emittieren solche synchronisierten digitalen Systeme elektromagnetische Strahlung in schmalen Bändern um die Taktfrequenz und ihre Oberschwingungen. Das dabei resultierende Frequenzspektrum kann - an gewissen Frequenzen - den maximal zulässigen Wert für die elektromagnetische Beeinflussung übersteigen. Solche maximal zulässigen Werte werden z.B. von der FCC in den USA, der Japan Electronics and Information Technology Industries Association (JEITA) in Japan und der International Electrotechnical Commission (IEC) in Europa vorgegeben.

Zur Senkung der spektralen Leistungsdichte und Einhaltung der Normen kann ein über ein Frequenzband gespreiztes bzw. jitterndes Taktsignal verwendet werden, sodass Spitzenwerte der ausgesendeten Energie gesenkt werden. Anstelle eines schmalbandigen Taktsignals kann also ein Signal mit einer größeren Bandbreite verwendet werden, wobei die Sendeenergie, die ansonsten in mehreren sehr kleineren Frequenzbereichen konzentriert ist, auf einen größeren Frequenzbereich verteilt wird.

Zur Erzeugung eines solchen gespreizten Taktsignals sind bereits verschiedene Methoden bekannt. Beispielsweise kann dafür ein Frequenzmodulator, ein jitternder Oszillator, ein Spread Spectrum Clock Integrated Circuit, oder eine Frequency Hopping Spread Spectrum Schaltung verwendet werden.

Bei der Direct Sequence Spread Spectrum (DSSS) genannten Methode wird das Taktsignal direkt definiert phasenmoduliert bzw. mit einem Spreizcode verknüpft, sodass die Leistung des Taktsignals auf ein breites, definiert gespreiztes Frequenzspektrums zwischen einer oberen Frequenz fₘₐₓ und einer unteren Frequenz fₘᵢₙ verteilt wird.

Beim Frequenzsprungverfahren (Frequency Hopping Spread Spectrum, FHSS) wird das Signal nacheinander auf viele Kanäle verteilt, wobei zu einem Zeitpunkt immer nur ein Kanal, der zufällig oder geeignet pseudozufällig gewählt wird, genutzt wird. Dadurch ergibt sich, obwohl jeder Kanal eine kleine Bandbreite besitzt, für das Gesamtsignal eine größere, gespreizte Bandbreite. Der Unterschied von FHSS zum klassischen Frequenzmultiplex besteht darin, dass beim FHSS die Kanalbelegung sequentiell erfolgt, und beim klassischen Frequenzmultiplex die Signalanteile in den Einzelkanälen gleichzeitig vorhanden sind.

Die Anwendung des Frequenzspreizverfahrens für die RadarMess-Technik - insbesondere für Radar-Messvorrichtungen zur Ergründung von Gebäudewänden - ist bisher nicht bekannt. Gemäss dem bisherigen Stand der Technik würde ein Fachmann das Aussenden der Radar-Signalimpulse mir einer instabilen, jitternden Sendefrequenz verneinen, da das beim Empfang der reflektierten Signalimpulse erzeugte Eingangssignal anhand bisher bekannter Empfangsschaltungen zeitlich zu ungenau abgetastet würde.

Eine Aufgabe der Erfindung ist daher das Bereitstellen eines verbesserten Radar-Messverfahrens zum Orten eines - im Speziellen in einem zu untersuchenden Medium eingebetteten - Objekts und einer verbesserten ebensolchen Radar-Messvorrichtung.

Insbesondere soll bei hoher abgestrahlter Gesamtleistung die spektrale Leistungsdichte im Verhältnis gesenkt und somit vorgegebene Normen bezüglich der maximalen abgestrahlten Leistungsdichte zuverlässiger eingehalten werden, wobei dennoch ein Abtasten des beim Empfang der reflektierten Radar-Signalimpulse generierten Eingangssignals mit hinreichend hoher Genauigkeit - insbesondere Pikosekundengenauigkeit - ermöglicht wird.

Diese Aufgabe wird durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Beim erfindungsgemässen Radar-Messverfahren zum Orten eines Objekts mittels elektromagnetischer Radar-Signalimpulse werden die Frequenzspreizungsmethode (Spread-Spektrum) und die Sample-Hold-Methode zum Abtasten des empfängerseitig erzeugten Eingangssignals kombiniert.

Um dabei trotz der durch die Frequenzspreizung verursachten Instabilität bzw. des Jitterns der Sendefrequenz beim Empfang der reflektierten Teile der Radar-Signalimpulse ein hinreichend genaues Abtasten des Eingangssignals zu gewährleisten, werden gemäss der Erfindung sowohl Sender als auch Empfänger mit derselben Taktfrequenz getaktet. Diese Taktfrequenz wird dabei mit der Spread-Spectrum-Methode gespreizt. Beim Empfänger wird der Samplepuls, der die Abtastzeiten des beim Empfang erzeugten Eingangssignals vorgibt, unter Verwendung der gemeinsamen Taktfrequenz entsprechend zum Sendesignal verschoben.

Dadurch kann sowohl die emittierte spektrale Leistungsdichte gesenkt als auch ein hochpräzises, insbesondere pikosekundengenaues Abtasten des Eingangssignals gewährleistet werden.

Im Einzelnen erfolgen bei dem Radar-Messverfahren zum Orten eines Objekts ein Aussenden der Radar-Signalimpulse und ein Empfangen von an dem Objekt reflektierten Anteilen der Radar-Signalimpulse, wobei ein Eingangssignal generiert wird.

Das Eingangssignal wird anhand einer Abtast-Halte-Schaltung abgetastet, wobei durch einen Samplingpuls die Abtastzeiten des Eingangssignals vorgegeben werden und dadurch ein Ausgangssignal geringerer Frequenz erzeugt wird.

Dabei werden sowohl senderseitig die auszusendenden Radar-Signalimpulse als auch empfängerseitig die Abtast-Halte-Schaltung mit derselben, sich innerhalb eines gespreizten Frequenzspektrums fortlaufend ändernden - insbesondere jitternden - Taktfrequenz getaktet.

Das auf diese Weise erzeugte Ausgangssignal kann nun zur Bestimmung der Lage des Objekts anhand bekannter Auswerte-und Rechenmethoden ausgewertet werden. Zum Beispiel können die Laufzeiten der Radar-Signalimpulse aus dem Ausgangssignal bestimmt und mit einer momentanen Empfangssignalstärke bewertet werden.

Insbesondere kann eine solche gespreizte Taktfrequenz bereitgestellt werden durch einen Frequenzmodulator, einen jitternden Oszillator oder einen Spread Spectrum Clock Integrated Circuit. Derartige Taktfrequenzgeber zur Erzeugung der instabilen, zitternden Frequenz mittels der Spread-Spectrum-Methode sind dem Fachmann an sich bekannt.

Alternativ kann das Bereitstellen der gespreizten bzw. jitternden Taktfrequenz auch durch ein Erzeugen von jeweils in der Phase unterschiedlich verschobenen Signalen und einem für jede Periode erfolgenden, insbesondere zufälligen, Auswählen jeweils eines der verschobenen Signale erfolgen.

Ebenso bereits an sich bekannt sind dem Fachmann geeignete Sample-Hold-Schaltungen, die zum Abtasten des Eingangssignals verwendet werden können. Dabei wird durch den Samplingpuls ein Abtastzeitfenster vorgegeben, währenddessen das Ausgangssignal - mit exponentiellem Verlauf - den Wert des Eingangssignals annimmt und dieser Wert anschliessend bis zum darauf folgenden Samplingpuls von einem Kondensator im Wesentlichen gehalten wird. Zur Abtastung des gesamten Eingangssignals, d.h. im Wesentlichen sämtlicher Werte einer Periode, wird der Samplingpuls über das Eingangssignal verschoben. Zur Steuerung der Verschiebung des Samplingpuls über das Eingangssignal, sodass trotz der instabilen Sendefrequenz ein hochpräzises Abtasten des Eingangssignals erfolgen kann, wird erfindungsgemäss dieselbe jitternde Taktfrequenz verwendet, die auch zur Taktung der Sendeschaltung dient.

Im Gegensatz zu bekannten Kommunikationssystemen mit Spread Spectrum Technik, wobei seitens des Empfängers eine Demodulation des Empfangssignals erfolgt, wird im Rahmen der Erfindung das empfangene Eingangssignal direkt abgetastet und dabei der Abtastpuls - gesteuert durch die gemeinsam verwendete Taktfrequenz - zum Sendesignal verschoben. Eine separate Kenntnis der definierten Frequenzmodulation bzw. des Spreizcodes, der zur Erzeugung der gespreizten Taktfrequenz verwendet wird, ist daher nicht erforderlich. Aus diesem Grund kann als Frequenzmodulator - neben Spread Spectrum Integrated Circuits - auch ein stark jitternder Oszillator verwendet werden, durch den keine vorgegebene definierte, sondern eine zufällige Spreizung des Taktsignals erfolgt.

Das Verschieben des Samplingpulses kann beispielsweise durch eine Komparatorschaltung, einen Delay-Locked Loop oder einen Direct Digital Synthesizer erfolgen. Solche Methoden zur Verschiebung des Samplingpulses sich dem Fachmann an sich ebenso bekannt, wobei darauf im Rahmen der Figurenbeschreibung näher eingegangen wird.

Das beschriebene Radar-Messverfahren ist insbesondere ausgelegt zum Orten eines in einem Medium - im Speziellen in einer Wand - eingebetteten Objekts. Dazu können die Radar-Signalimpulse vorzugsweise innerhalb eines breiten, definiert gespreizten Frequenzspektrums zwischen einer oberen Frequenz fₘₐₓ und einer unteren Frequenz fₘᵢₙ im Hochfrequenzbereich zwischen 0,5 und 10 GHz ausgesendet werden. Aus dem beim erfindungsgemässen Abtasten des Eingangssignals erzeugten Ausgangssignal können eine Form, eine Einbettungstiefe, eine Position und/oder eine Orientierung des eingebetteten Objekts bestimmt werden. Im Speziellen wird aus diesen abgeleiteten Grössen ein Ergebnisbild mit Lageinformation bezüglich des eingebetteten Objekts erzeugt und grafisch bereitgestellt.

Des Weiteren betrifft die Erfindung eine Radar-Messvorrichtung zur Ortung eines Objekts mittels elektromagnetischer Radar-Signalimpulse. Dazu weist die Radar-Messvorrichtung eine Antennenanordnung mit mehreren Antennen auf, die zum Empfang und/oder zur Aussendung der Radar-Signalimpulse ausgebildet sind. Ausserdem sind mindestens eine Sendeschaltung zur Erzeugung der auszusendenden Radar-Signalimpulse und mindestens eine Empfangsschaltung zur Detektion von am Objekt reflektierten Teilen der Radar-Signalimpulse vorhanden. Dabei weist die mindestens eine Empfangsschaltung ein Abtast-Halte-Glied zur Abtastung eines beim Empfang erzeugten Eingangssignals auf.

Zudem ist eine Auswerteeinheit vorgesehen, die anhand des beim Abtasten des Eingangssignals erzeugten Ausgangssignals eine Form, eine Einbettungstiefe, eine Position und/oder eine Orientierung des eingebetteten Objekts bestimmen kann. Im Speziellen kann zusätzlich ein Display zum grafischen Darstellen eines Ergebnisbilds mit abgeleiteter Lageinformation bezüglich des eingebetteten Objekts an einem Gehäuse der Radar-Messvorrichtung angeordnet sein.

Gemäss der Erfindung weist die Radar-Messvorrichtung nun einen Taktfrequenzgeber zur Erzeugung einer sich innerhalb eines gespreizten Frequenzspektrums ändernden - insbesondere jitternden - Taktfrequenz auf, wobei der Taktfrequenzgeber derart mit der mindestens einen Sendeschaltung und der mindestens einen Empfangsschaltung verbunden ist, dass sowohl die Sendeschaltung als auch das Abtast-Halte-Glied der Empfangsschaltung mit derselben - insbesondere jitternden - Taktfrequenz getaktet werden.

Der Taktfrequenzgeber kann dabei zum Beispiel ausgebildet sein als Frequenzmodulator, jitternder Oszillator oder Spread Spectrum Clock Integrated Circuit. Alternativ kann zur Erzeugung des Frequenzjitters als Taktfrequenzgeber auch eine Schaltung zur Erzeugung von jeweils in der Phase unterschiedlich verschobenen Signalen und zum für jede Periode erfolgenden - insbesondere zufälligen - Auswählen jeweils eines der verschobenen Signale ausgebildet sein, sodass ein die Taktfrequenz bereitstellendes gespreiztes Signal generiert wird.

Dabei ist der Taktfrequenzgeber derart mit der mindestens einen Sendeschaltung verbunden, dass durch die Taktfrequenz ein die Abtastzeiten des Eingangssignals vorgebender Samplingpuls zeitlich über das beim Empfangen generierte Eingangssignal verschoben wird, sodass ein vom Eingangssignal abhängiges Ausgangssignal geringerer Frequenz erzeugt wird.

Zur Verschiebung des Samplingpulses kann beispielsweise eine Komparatorschaltung, ein Delay-Locked Loop oder ein Direct Digital Synthesizer vorgesehen sein. Ebenso können auch weitere, dem Fachmann bekannte und geeignete Schaltungen zur Verschiebung des Samplingpulses Anwendung finden, wobei die Verschiebungsschaltung für den Samplingpuls durch die auch senderseitig verwendete, gespreizte Taktfrequenz getaktet wird.

Beispielsweise ist die Radar-Messvorrichtung ausgelegt zum Orten eines in einem Medium - insbesondere in einer Wand - eingebetteten Objekts und als Handgerät ausgebildet. Dabei werden die Radar-Signalimpulse vorzugsweise innerhalb eines breiten, definiert gespreizten Frequenzspektrums zwischen einer oberen Frequenz fₘₐₓ und einer unteren Frequenz fₘᵢₙ im Hochfrequenzbereich zwischen 0,5 und 10 GHz ausgesendet.

Das erfindungsgemässe Verfahren und die erfindungsgemässe Vorrichtung werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig.1: eine Ausführungsform für die Antennenanordnung der erfindungsgemässen Radar-Messvorrichtung;
- Fig.2: eine Ausführungsform der erfindungsgemässen Radar-Messvorrichtung;
- Fig.3: eine Frequenzmodulation zur Spreizung des Spektrums der Taktfrequenz;
- Fig.4: die emittierte spektrale Leistungsdichte einer Radar-Messvorrichtung einmal mit und einmal ohne Frequenzjitter;
- Fig.5: eine Sample-Hold-Schaltung zum direkten Abtasten eines beim Empfang reflektierter Radar-Signalimpulse erzeugten Eingangssignals;
- Fig.6: eine schemenhafte Darstellung des Eingangssignals, des Samplingpulses und des Ausgangssignals der Sample-Hold-Schaltung aus Figur 5;
- Fig.7: eine erste Ausführung einer Schaltung zur Verschiebung des Samplingpulses;
- Fig.8: eine zweite Ausführung einer Schaltung zur Verschiebung des Samplingpulses; und
- Fig.9: eine dritte Ausführung einer Schaltung zur Verschiebung des Samplingpulses.

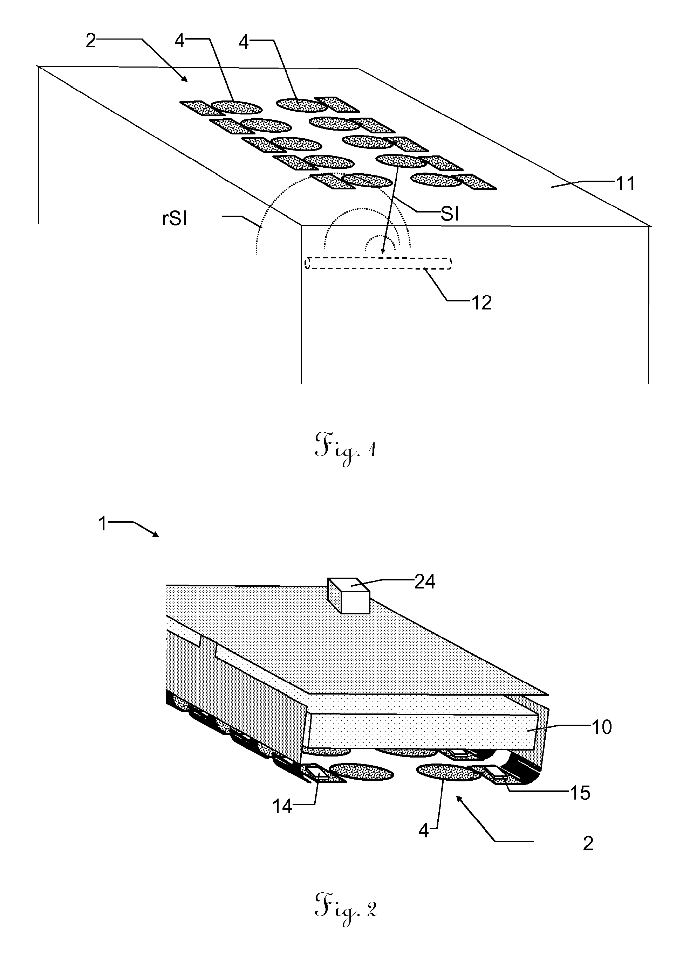

Figuren 1 und 2 zeigen eine erfindungsgemässe Radar-Messvorrichtung 1 zur Ortung eines insbesondere in einem zu untersuchenden Medium 11 eingeschlossenen Objekts 12 mittels elektromagnetischer Signalimpulse SI im Bereich zwischen 0,5 und 10 GHz. Dabei sind Sender und Empfänger der Radar-Messvorrichtung 1 als Ultra-Wide-Band-Einheiten (UWB) ausgebildet.

Die Radar-Messvorrichtung 1 weist dazu eine Antennenanordnung 2 aus mehreren Antennen 4 auf, die zum Empfang und/oder zur Aussendung der Signalimpulse SI ausgebildet und relativ zueinander bekannt positioniert sind. Rein beispielhaft können drei bis sechs Sende-Antennen und drei bis sechs Empfangs-Antennen vorgesehen sein. Die Antennen 4 sind dabei mit Sendeschaltungen 14 zur Erzeugung der auszusendenden Signalimpulse bzw. Empfangsschaltungen 15 zur Detektion von am Objekt 12 reflektierten Teilen der Signalimpulse rSI verbunden. Zusätzlich sind Steuermittel vorhanden, mittels welcher die Sende- und Empfangsschaltungen 14,15 derart schaltbar und steuerbar sind, dass die Signalimpulse SI,rSI mit mindestens zwei - insbesondere mindestens drei - Sende-Empfangs-Antennenkombinationen bzw. Sende-Empfangs-Antennenpaarungen ausgesendet bzw. empfangen werden.

Des Weiteren ist eine Auswerteeinheit 24 mit einem Rechenmittel vorhanden, wobei die Auswerteeinheit 24 ausgebildet ist zur Bestimmung des Orts, insbesondere der Einbettungstiefe im Medium 11 (z.B. in einer Wand) und/oder der exakten dreidimensionalen Position des Objekts 12 relativ zu den Positionen der Antennen.

Zur Anzeige eines Ergebnisbilds mit abgeleiteter Lageinformation bezüglich des eingebetteten Objekts 12 verfügt die Radar-Messvorrichtung 1 in einer speziellen Ausführungsform über ein Display.

Die Darstellung aus Figur 2 zeigt die Antennenanordnung 1 mit einer parallel dazu angeordneten hochfrequenzabsorbierenden Materialschicht 10. Das durch eine Zone freien Raums von den Antennen-Arrays getrennte absorbierende Material 10 ist - ausser wegen dessen entkoppelnder Wirkung - vorteilhaft, um sowohl Eigenresonanzen der einzelnen Antennen zu bedämpfen als auch irreführende Reflexionen leitfähiger Strukturen und Komponenten der die Antennenanordnung 2 beinhaltenden Radar-Messvorrichtung 1 zu unterdrücken. Insbesondere können dabei sämtliche Komponenten der Radar-Messvorrichtung 1 in einem handhaltbaren Gehäuse angeordnet sein, das zum einfachen Anlegen an eine zu untersuchenden Wand geeignet ist.

In Figur 1 ist zum einfacheren Verständnis die Antennenanordnung 2 ohne die weiteren vorhandenen Komponenten in einem an das zu untersuchende Medium 11 angelegten Zustand dargestellt. Im Medium 11 ist dabei ein Objekt eingebettet, an dem die ausgesendeten Signalimpulse SI reflektiert werden.

Gemäss der Erfindung weisen die Empfangsschaltungen 15 der Radar-Messvorrichtung 1 ein Abtast-Halte-Glied zur Abtastung des beim Empfang erzeugten, hochfrequenten Eingangssignals auf. Zudem ist ein Taktfrequenzgeber vorhanden zur Erzeugung einer sich innerhalb eines gespreizten Frequenzspektrums ändernden - insbesondere jitternden - Taktfrequenz. Der Taktfrequenzgeber ist derart mit den Sendeschaltungen und den Empfangsschaltungen verbunden, dass sowohl die Sendeschaltungen als auch die jeweiligen Abtast-Halte-Glieder der Empfangsschaltungen mit derselben jitternden gespreizten Taktfrequenz getaktet werden.

Durch die derart vorgegebene Taktfrequenz werden empfängerseitig die Samplingpulse, die die Abtastzeiten des Eingangssignals definieren, entsprechend zeitlich über das beim Empfangen generierte Eingangssignal verschoben, sodass ein vom Eingangssignal abhängiges Ausgangssignal geringerer Frequenz erzeugt wird. Somit wird ermöglicht, dass das Eingangssignal trotz der - zur Reduktion der emittierten spektralen Leistungsdichte - jitternden und gespreizten Sendefrequenz mit einer vergleichsweise sehr hohen zeitlichen Genauigkeit abgetastet werden kann.

Das derart erzeugte, niederfrequente Ausgangssignal kann anschliessend mittels sämtlicher bekannter Methoden durch die Auswerteeinheit zur Bestimmung der Lage des eingebetteten Objekts 12 und zur Berechnung eines Ergebnisbildes mit abgeleiteter Lageinformation bezüglich des eingebetteten Objekts 12 ausgewertet werden.

Erfindungsgemäss kann also der Zielkonflikt für Radar-Messvorrichtungen verbessert gelöst werden, dass sowohl die spektrale Leistungsdichte durch eine Spreizung des Spektrums der Sendefrequenz der emittierten Radar-Signalimpulse reduziert wird und dennoch das beim Empfangen der reflektierten Radar-Signalimpulse erzeugte Eingangssignal hochgenau abgetastet werden kann.

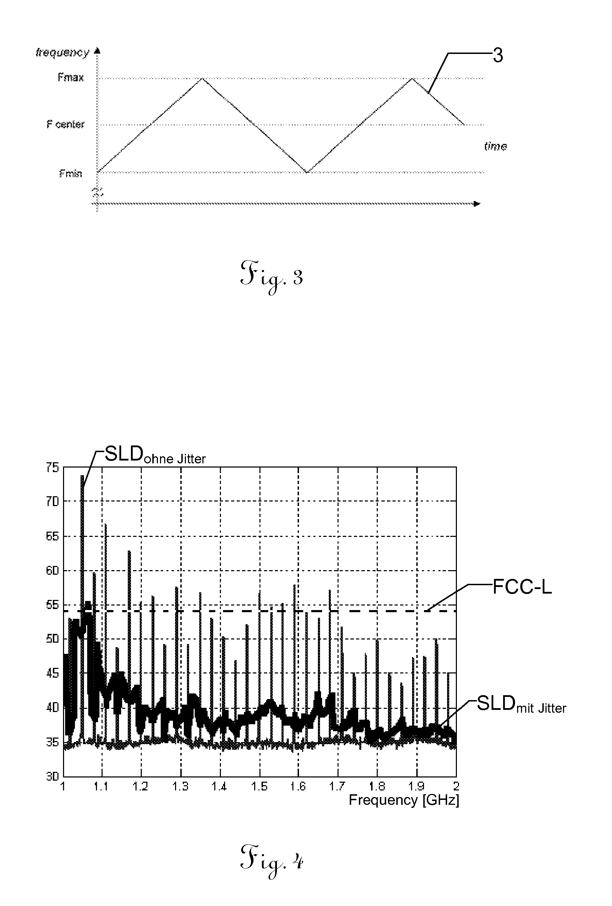

Das Frequenz-Zeit-Diagramm aus Figur 3 zeigt beispielhaft eine mögliche Spreizung der Taktfrequenz 3, wobei die Taktfrequenz 3 fortlaufend um eine mittlere Frequenz F_{center} dreiecksmoduliert wird. D.h. die Taktfrequenz 3 wird über der Zeit entsprechend der in Figur 3 dargestellten Dreiecks-Kurve verändert. Dadurch ergibt sich ein gespreiztes, breiteres Spektrum, das im Verhältnis eine kleinere Leistungsdichte aufweist.

Alternativ zur in Figur 3 gezeigten Frequenzmodulation können jedoch auch jegliche weitere bekannte und geeignete Arten von Frequenzmodulation Anwendung finden, durch die ein gespreiztes Spektrum mit einer sich zwischen einer oberen Frequenz Fₘₐₓ und einer unteren Frequenz Fₘᵢₙ ständig ändernden Taktfrequenz erzeugt werden kann.

Da erfindungsgemäss dieselbe Taktfrequenz 3 sender- und empfängerseitig verwendet wird, ist eine separate Kenntnis der Modulationsart (bzw. des Spreizcodes) seitens des Empfängers nicht zwingend erforderlich. Beispielsweise können daher auch Frequenzspreizungsmethoden angewendet werden, wobei sich die Taktfrequenz zufällig innerhalb eines bestimmten Bereichs fortlaufend ändert.

Entsprechende Taktfrequenzgeber, die ein solches Spread Spectrum erzeugen, sind dem Fachmann bekannt. Insbesondere kann dabei ein Spread Spectrum Clock Integrated Circuit oder ein stark jitternder Oszillator verwendet werden. Alternativ kann auch eine Schaltung zur Erzeugung von jeweils in der Phase unterschiedlich verschobenen Signalen und zum für jede Periode erfolgenden - insbesondere zufälligen - Auswählen jeweils eines der verschobenen Signale verwendet werden, wodurch ebenso ein gespreiztes Signal entsteht. Als weitere alternative Möglichkeit kann beispielsweise auch eine Frequency Hopping Spread Spectrum Schaltung verwendet werden, wodurch eine sich pseudozufällig ändernde Frequenz innerhalb eines vorgegebenen Frequenzbereichs erzeugt werden kann.

In Figur 4 ist ein Diagramm dargestellt, aus dem die abgestrahlte Leistungsdichte in Funktion der Frequenz ersichtlich ist. Dabei ist die emittierte spektrale Leistungsdichte SLD_{mit Jitter} eines mit einer jitternden Taktfrequenz getakteten Senders im Vergleich zur emittierten spektralen Leistungsdichte SLD_{ohne Jitter} eines Senders, der von einem synchronen Taktgeber getaktet wird, aufgezeigt.

Ebenso im Diagramm dargestellt ist das von der Federal Communications Commission (FCC) vorgegebene Limit FCC-L für die spektrale Leistungsdichte der emittierten elektromagnetischen Strahlung.

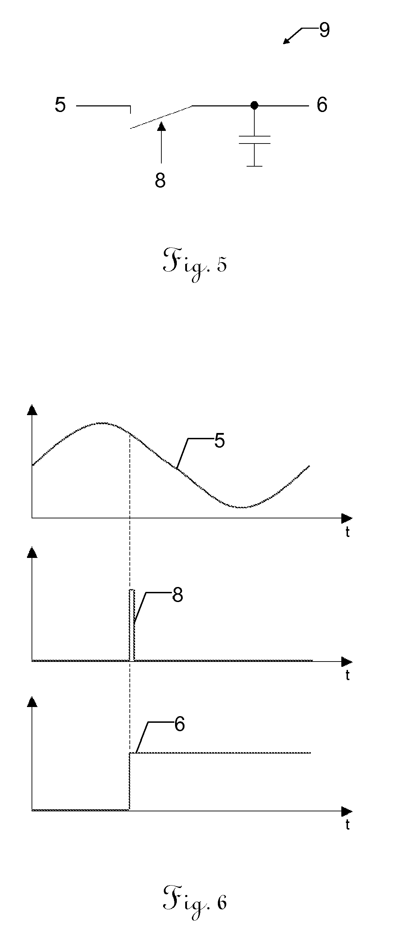

In Figuren 5 und 6 ist das im Rahmen des Radar-Messverfahrens angewendete Samplingverfahren mit einer Abtast-Halte-Schaltung 9 aufzeigt.

Um periodische Signale mit Frequenzen im MHz- und GHz-Bereich direkt abzutasten, wird ein - dem Fachmann an sich bekanntes - spezielles Samplingverfahren angewendet. Wie in Figur 5 dargestellt, wird bei diesem Verfahren das schnelle Eingangssignal 5 über einen Schalter mit einem sehr kurzen Samplingpuls 8 abgetastet. Während der Schalter geschlossen ist, gleicht sich das Ausgangssignal 6 dem Eingangssignal 5 an. Öffnet sich der Schalter wieder, wird das Ausgangssignal 6 mit dem Kondensator gehalten. In Figur 6 sind dabei das Eingangssignal 5, der Samplingpuls 8 und das Ausgangssignal 6 skizzenhaft dargestellt.

Um nun das komplette Eingangssignal 5 abtasten zu können, wird der Samplingpuls 8 zeitlich über das Eingangssignal 5 geschoben. Durch die bekannte Verschiebung kann das Eingangssignal 5 am Ausgang mit einer wesentlich geringeren Frequenz abgetastet und in einem Prozessor reproduziert werden.

Erfindungsgemäss wird die Verschiebung des die Abtastzeiten vorgebenden Samplingpulses 8 getaktet durch die gespreizte, insbesondere jitternde Taktfrequenz, welche auch als Clock für die Sendeschaltungen dient.

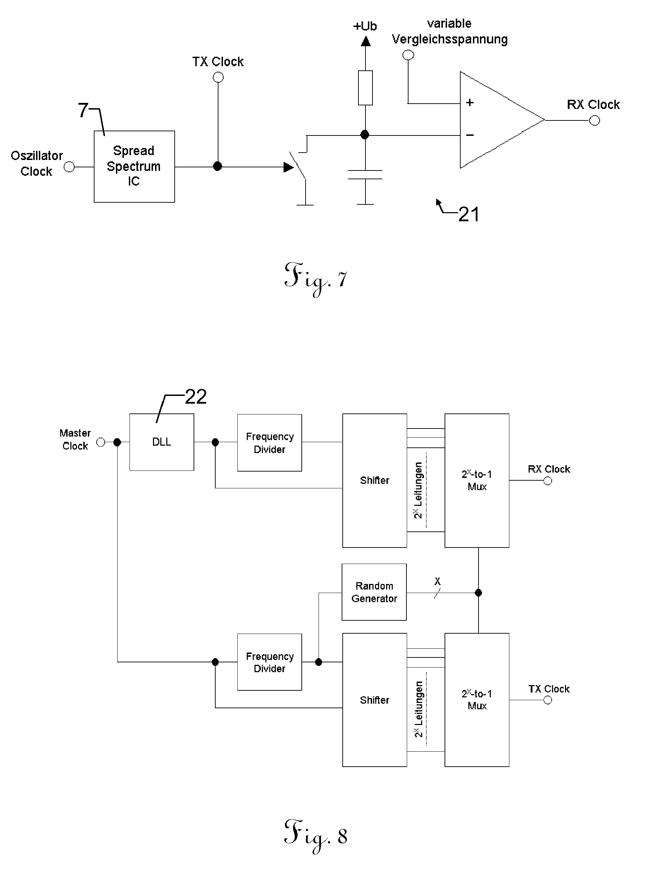

In Figur 7 ist eine erste mögliche Methode zum Erzeugen der sowohl sender- als auch empfängerseitig verwendeten gespreizten Taktfrequenz und zur entsprechenden Verschiebung des Samplingpulses über das Eingangssignal dargestellt. Die gespreizte, jitternde Taktfrequenz wird beispielhaft durch einen Spread Spectrum Clock Integrated Circuit als Taktfrequenzgeber 7 generiert und die Verschiebung des Samplingpulses anhand einer Komparatorschaltung 21 erzeugt.

Dabei wird der jitternde Clock wird auf einen Schalter geführt. Der Schalter schliesst den Kondensator kurz, wobei dieser über einen Widerstand geladen wird. Während der Schalter geöffnet ist, steigt die Spannung exponentiell an. Schliesst sich der Schalter, springt die Spannung auf 0V. Dieses Signal wird nun mit einer Spannung am Komparator verglichen. Die Ausgangsspannung des Komparators springt auf 0V, wenn die Spannung am Kondensator grösser ist als die Vergleichsspannung. Wird der Schalter geschlossen, springt die Ausgangsspannung wieder auf die Versorgungsspannung. Durch das Widerstand-Kondensator-Glied der Komparatorschaltung ergibt sich ein nichtlinearer Zusammenhang zwischen der Vergleichsspannung und der Zeit.

Alternativ kann der Kondensator auch über eine konstante Stromquelle gespeist werden. Dadurch ergibt sich ein linearer Zusammenhang zwischen der Spannung und der Zeit.

Durch diese Komparatorschaltung kann nun der Samplingpuls, mittels dem die Abtast-Halte-Schaltungen der Empfänger RX gesteuert werden, entsprechend verschoben werden.

Wie in Figur 8 gezeigt kann der Empfänger-Clock auch durch einen Delay Locked Loop 22 (DLL) verschoben werden. Da der DLL jedoch eine stabile Eingangsfrequenz benötigt, muss der Frequenzjitter bzw. die Frequenzspreizung nach dem DLL erzeugt werden.

Dazu wird die geteilte Frequenz in einem Shifter um jeweils ganze Perioden einer Masterfrequenz verschoben. Rein beispielhaft können dabei 16 verschieden verschobene Signale generiert werden. Durch einen Zufallsgenerator wird nun für jede Periode ein anderes Signal ausgewählt. Dadurch entsteht am Ausgang des Multiplexers ein gespreiztes Signal.

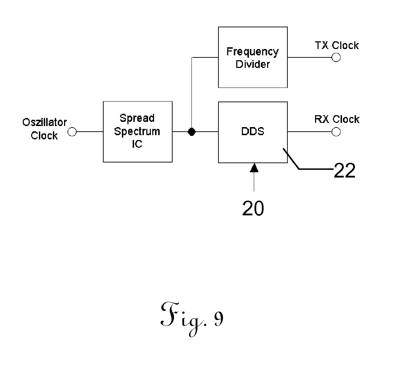

In Figur 9 ist das Blockschaltbild einer weiteren Methode zur Verschiebung des Samplingpulses dargestellt. Ein Oszillator Clock wird dabei wieder z.B. anhand eines Spread Spectrum Clock Integrated Circuits gespreizt, die gespreizte Taktfrequenz über einen Frequenzteiler geteilt und damit die Sendeschaltungen TX betrieben. Gemäss der Erfindung wird mit derselben gespreizten Taktfrequenz nun auch ein Direct Digital Synthesizer (DSS) betrieben, wobei über eine Programmierschnittstelle 20 die Phasenverschiebung des DDS-Ausgangssignals eingestellt werden kann. Durch dieses DDS-Ausgangssignal wird nun der Empfänger-Clock bereitgestellt, sodass der Samplingpuls, mittels dem die Abtast-Halte-Glieder der Empfängerschaltungen RX gesteuert werden, entsprechend verschoben wird.

Es versteht sich, dass diese dargestellten Figuren nur mögliche Ausführungsbeispiele schematisch darstellen. Die verschiedenen Ansätze können erfindungsgemäss miteinander sowie mit Verfahren bzw. Radarmess-Vorrichtungen des Stands der Technik kombiniert werden. Ebenso können zur Erzeugung der gespreizten Taktfrequenz sowie zur Verschiebung des Samplingpulses weitere dem Fachmann bekannte Schaltungen bzw. Methoden angewendet werden.

## Patentansprüche

1. Radar-Messverfahren zum Orten eines Objekts (12) mittels elektromagnetischer Radar-Signalimpulse (SI), mit den Schritten
• Aussenden der Radar-Signalimpulse (SI),
• Empfangen von reflektierten Anteilen der Radar-Signalimpulse (rSI), wobei ein Eingangssignal (5) generiert wird,
• Abtasten des Eingangssignals (5) anhand einer Abtast-Halte-Schaltung (9), wobei durch einen Samplingpuls (8) die Abtastzeiten des Eingangssignals (5) vorgegeben werden und **dadurch** ein Ausgangssignal (6) geringerer Frequenz erzeugt wird, und
• Auswerten des Ausgangssignals (6) und daraus Bestimmen einer Lage des Objekts (12),
**dadurch gekennzeichnet, dass**
sowohl senderseitig die auszusendenden Radar-Signalimpulse (SI) als auch empfängerseitig die Abtast-Halte-Schaltung (9) mit einer selben, sich innerhalb eines gespreizten Frequenzspektrums ändernden - insbesondere jitternden - Taktfrequenz (3) getaktet werden.

2. Radar-Messverfahren nach Anspruch 1,
**dadurch gekennzeichnet, dass**
die Taktfrequenz sich innerhalb des gespreizten Frequenzspektrums fortlaufend ändert und bereitgestellt wird durch:
• einen Frequenzmodulator,
• einen jitternden Oszillator,
• einen Spread Spectrum Clock Integrated Circuit, oder
• Erzeugen von jeweils in der Phase unterschiedlich verschobenen Signalen und für jede Periode erfolgendes, insbesondere zufälliges, Auswählen jeweils eines der verschobenen Signale, sodass ein die Taktfrequenz bereitstellendes gespreiztes Signal entsteht.

3. Radar-Messverfahren nach Anspruch 1 oder 2,
**dadurch gekennzeichnet, dass**
durch die sich ändernde und sowohl sender- als auch empfängerseitig gemeinsam verwendete Taktfrequenz (3) der Samplingpuls (8) zeitlich über das beim Empfangen generierte Eingangssignal (5) verschoben wird.

4. Radar-Messverfahren nach Anspruch 3,
**dadurch gekennzeichnet, dass**
das Verschieben des Samplingpulses (8) erfolgt durch
• eine Komparatorschaltung (21),
• einen Delay-Locked Loop (22) oder
• einen Direct Digital Synthesizer (23).

5. Radar-Messverfahren nach einem der vorangehenden Ansprüche,
**dadurch gekennzeichnet, dass**
durch den Samplingpuls (8) ein Abtastzeitfenster vorgegeben wird, währenddessen das Ausgangssignal (6) - mit exponentiellem Verlauf - den Wert des Eingangssignals (5) annimmt und anschliessend den angenommenen Wert bis zum darauf folgenden Samplingpuls im Wesentlichen hält.

6. Radar-Messverfahren nach einem der vorangehenden Ansprüche,
**dadurch gekennzeichnet, dass**
• das Radar-Messverfahren ausgelegt ist zum Orten eines in einem Medium (11) - insbesondere in einer Wand - eingebetteten Objekts (12) und
• eine Form, eine Einbettungstiefe, eine Position und/oder eine Orientierung des eingebetteten Objekts (12) bestimmt wird, im Speziellen wobei daraus ein Ergebnisbild mit abgeleiteter Lageinformation bezüglich des eingebetteten Objekts (12) erzeugt und grafisch bereitgestellt wird.

7. Radar-Messverfahren nach einem der vorangehenden Ansprüche,
**dadurch gekennzeichnet, dass**
die Radar-Signalimpulse (SI) innerhalb eines breiten, definiert gespreizten Frequenzspektrums zwischen einer oberen Frequenz fₘₐₓ und einer unteren Frequenz fₘᵢₙ im Hochfrequenzbereich zwischen 0,5 und 10 GHz ausgesendet werden.

8. Radar-Messvorrichtung (1) zur Ortung eines Objekts (12) mittels elektromagnetischer Radar-Signalimpulse (SI), mit
• einer Auswerteeinheit (24),
• einer Antennenanordnung (2) mit mehreren Antennen (4), wobei die Antennen (4) zum Empfang und/oder zur Aussendung der Radar-Signalimpulse (SI) ausgebildet sind,
• mindestens eine Sendeschaltung (14) zur Erzeugung der auszusendenden Radar-Signalimpulse (SI), und
• mindestens eine Empfangsschaltung (15) zur Detektion von am Objekt (12) reflektierten Teilen der Radar-Signalimpulse (SI), die ein Abtast-Halte-Glied zur Abtastung eines beim Empfang erzeugten Eingangssignals aufweist,
**gekennzeichnet durch**
einen Taktfrequenzgeber (7) zur Erzeugung einer sich innerhalb eines gespreizten Frequenzspektrums ändernden - insbesondere jitternden - Taktfrequenz (3), wobei der Taktfrequenzgeber (7) derart mit der mindestens einen Sendeschaltung (14) und der mindestens einen Empfangsschaltung (15) verbunden ist, dass sowohl die Sendeschaltung (14) als auch das Abtast-Halte-Glied der Empfangsschaltung (15) mit derselben - insbesondere jitternden - Taktfrequenz (3) getaktet werden.

9. Radar-Messvorrichtung nach Anspruch 8,
**dadurch gekennzeichnet, dass**
der Taktfrequenzgeber (7) ausgebildet ist als:
• Frequenzmodulator,
• jitternder Oszillator,
• Spread Spectrum Clock Integrated Circuit, oder
• Schaltung zur Erzeugung von jeweils in der Phase unterschiedlich verschobenen Signalen und zum für jede Periode erfolgenden - insbesondere zufälligen - Auswählen jeweils eines der verschobenen Signale, sodass ein die Taktfrequenz bereitstellendes gespreiztes Signal generiert wird.

10. Radar-Messvorrichtung nach Anspruch 8 oder 9,
**dadurch gekennzeichnet, dass**
der Taktfrequenzgeber derart mit der mindestens einen Sendeschaltung (14) verbunden ist, dass durch die Taktfrequenz ein die Abtastzeiten des Eingangssignals vorgebender Samplingpuls zeitlich über das beim Empfangen generierte Eingangssignal verschoben wird, sodass ein vom Eingangssignal abhängiges Ausgangssignal geringerer Frequenz erzeugt wird.

11. Radar-Messvorrichtung nach Anspruch 10,
**gekennzeichnet durch**
eine der folgenden Komponenten zur Verschiebung des Samplingpulses:
• eine Komparatorschaltung (21),
• einen Delay-Locked Loop (22) oder
• einen Direct Digital Synthesizer (23).

12. Radar-Messvorrichtung nach Anspruch 10 oder 11,
**dadurch gekennzeichnet, dass**
• die Radar-Signalimpulse (SI) innerhalb eines breiten, definiert gespreizten Frequenzspektrums zwischen einer oberen Frequenz fₘₐₓ und einer unteren Frequenz fₘᵢₙ im Hochfrequenzbereich zwischen 0,5 und 10 GHz ausgesendet werden und
• die Radar-Messvorrichtung (1) ausgelegt ist zum Orten eines in einem Medium (11) - insbesondere in einer Wand - eingebetteten Objekts (12), wobei durch die Auswerteeinheit (24) anhand des Ausgangssignals (6) eine Form, eine Einbettungstiefe, eine Position und/oder eine Orientierung des eingebetteten Objekts (12) bestimmbar ist,
im Speziellen wobei daraus ein Ergebnisbild mit abgeleiteter Lageinformation bezüglich des eingebetteten Objekts (12) berechnet wird und mittels eines Displays grafisch darstellbar ist.
